# EUROPEAN PATENT APPLICATION

(11) **EP 4 443 273 A1**
(43) Date of publication of application: **09.10.2024**
(21) Application number: 24164921.9
(22) Date of filing: 20.03.2024
(51) Int. Cl.: G06F 3/01

(54) **DISPLAY CONTROL APPARATUS, DISPLAY CONTROL METHOD, AND PROGRAM**

(30) Priority: 31.03.2023 JP 2023056849; 24.04.2023 JP 2023070609
(71) Applicant: CANON KABUSHIKI KAISHA, Tokyo 146-8501 (JP)
(72) Inventor: IWAMOTO, Shohei, Tokyo, 146-8501 (JP); MIZUNO, Shogo, Tokyo, 146-8501 (JP)
(74) Representative: Canon Europe Limited

(57) **Abstract**

A display control apparatus (130) acquires information indicating virtual viewpoint information including a position of a point of gaze, which is a position gazed at from a virtual viewpoint, wherein the virtual viewpoint corresponds to a virtual viewpoint image that is generated based on a plurality of images captured by a plurality of imaging apparatuses (110), and displays an image (600) including a point of gaze object (602) indication the position of the point of gaze and a projected point of gaze object (603) indicating a position of the point of gaze on a projection plane.

## Description

### BACKGROUND

### Field

The present invention relates to a display control apparatus, a method for controlling a display control apparatus, and a program.

### Description of the Related Art

A technique which has been attracting attention in recent years is generating a virtual viewpoint image obtained based on a condition that the image is captured from a virtual camera viewpoint, from a plurality of images captured in a synchronized manner by a plurality of physical cameras installed at different positions. Japanese Patent Application Laid-Open No. 2014-215828 discusses a technique for generating a virtual viewpoint image using object images captured by a plurality of cameras arranged around the object.

In Japanese Patent Application Laid-Open No. 2014-215828, the user designates a position of the virtual camera and a position of a point of gaze indicating where the virtual camera is gazing at.

### SUMMARY

According to a first aspect of the present invention, there is provided a display control apparatus as specified in claims 1 to 11. According to a second aspect of the present invention, there is provided a display control method as specified in claim 12. According to a third aspect of the present invention, there is provided a program as specified in claim 13.

Further features of the present invention will become apparent from the following description of embodiments with reference to the attached drawings.

### BRIEF DESCRIPTION OF THE DRAWINGS

Fig. 1 is a diagram illustrating an image processing system.
Fig. 2 is a diagram illustrating an installation example of imaging apparatuses.
Fig. 3 is a diagram illustrating a hardware configuration of a display control apparatus.
Fig. 4 is a diagram illustrating a functional configuration of a display control apparatus according to a first embodiment.
Fig. 5 is a flowchart illustrating an operation procedure of the display control apparatus according to the first embodiment.
Fig. 6 is a diagram illustrating a screen display example according to the first embodiment.
Fig. 7 is a diagram illustrating a functional configuration of a display control apparatus according to a second embodiment.
Fig. 8 is a flowchart illustrating an operation procedure of the display control apparatus according to the second embodiment.
Fig. 9 is a diagram illustrating a screen display example according to the second embodiment.
Fig. 10 is a diagram illustrating a functional configuration of a display control apparatus according to a third embodiment.
Fig. 11 is a diagram illustrating position correction of a second virtual viewpoint according to the third embodiment.
Fig. 12 is a diagram illustrating a screen display example according to the third embodiment.
Fig. 13 is a diagram illustrating the position correction of the second virtual viewpoint according to the third embodiment.
Fig. 14 is a diagram illustrating a screen display example according to the third embodiment.
Fig. 15 is a diagram illustrating the position correction of the second virtual viewpoint according to the third embodiment.
Fig. 16 is a flowchart illustrating an operation procedure of the display control apparatus according to the third embodiment.
Fig. 17 is a diagram illustrating a functional configuration of a display control apparatus according to a fourth embodiment.
Fig. 18 is a flowchart illustrating an operation procedure of the display control apparatus according to the fourth embodiment.
Fig. 19 is a diagram illustrating a screen display example according to the fourth embodiment.

### DESCRIPTION OF THE EMBODIMENTS

Hereinafter, embodiments of the present disclosure will be described with reference to the drawings. Components described in the following embodiments are merely examples of the embodiments, and the present disclosure is not limited to the components. Further, not all combinations of features described in the embodiments are necessarily mandatory to the solving means.

A virtual viewpoint image is an image generated through an operation performed by a user and/or a dedicated operator freely operating the position and direction of a virtual camera, and also referred to as a free viewpoint image or an arbitrary viewpoint image. An embodiment of the present disclosure deals mainly with a case where the virtual viewpoint is designated by a user operation. However, the virtual viewpoint may be automatically designated based on a result of image analysis. In the following description, the term "image" shall cover both concepts of a moving image and a still image unless otherwise specified.

The virtual camera refers to a camera that is virtual and different from a plurality of imaging apparatuses actually installed around an imaging area, and is a concept for the sake of convenience in describing the virtual viewpoint related to the generation of a virtual viewpoint image. In other words, the virtual viewpoint image can be regarded as an image captured from the virtual viewpoint set within a virtual space associated with the imaging area. The position and direction of the viewpoint in capturing the virtual image can be expressed as the position and direction of the virtual camera. To put it in another way, it can be explained that the virtual viewpoint image is a simulated image obtained by a camera based on a condition that is installed at the virtual viewpoint set in the space. The concept of the virtual camera does not necessarily need to be used in implementing the configuration of the present embodiment. That is, at least information indicating a specific position and information indicating a direction in the space can be set, and a virtual viewpoint image can be generated based on the set information.

The imaging apparatuses can be any types as long as each include a physical camera. The imaging apparatuses may have a function of performing various types of image processing in addition to the physical camera. For example, the imaging apparatuses may each include a processing unit that performs foreground-background separation processing. The imaging apparatuses may each include a control unit that performs transmission control for transmitting an image of a partial area in a captured image. The imaging apparatuses may each include a plurality of physical cameras.

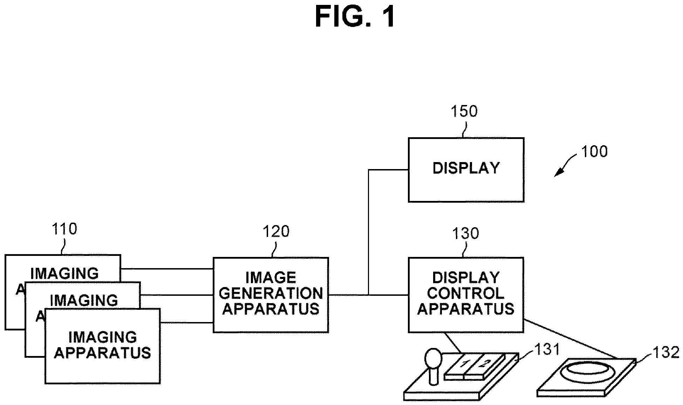

Fig. 1 is a diagram illustrating an image processing system 100 according to the present embodiment. The image processing system 100 includes a plurality of imaging apparatuses 110, an image generation apparatus 120, a display control apparatus 130, and a display 150. The imaging apparatuses 110, the image generation apparatus 120, and the display control apparatus 130 are connected via communication cables, such as a local area network (LAN) cable. While the communication cables in the present embodiment are LAN cables, the communication cables are not limited to the embodiment. The image generation apparatus 120 and the display 150 are connected via a video signal transmission cable.

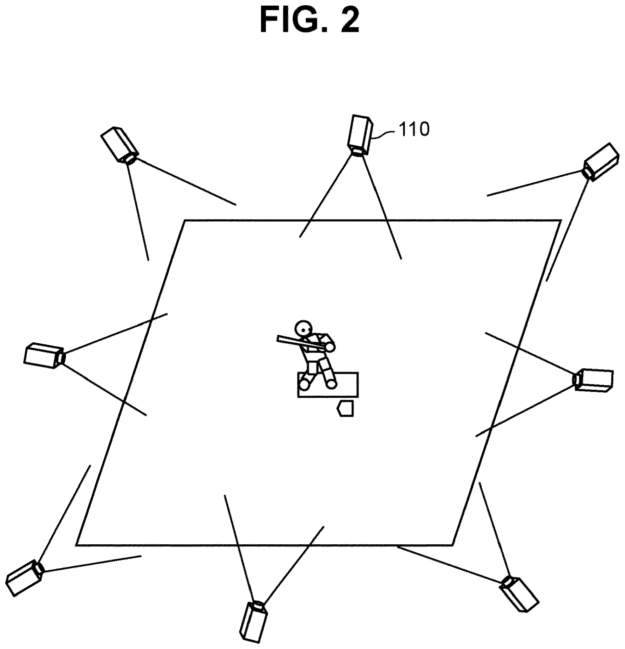

The imaging apparatuses 110 are digital cameras capable of capturing images (still images and moving images), for example. Fig. 2 is a diagram illustrating an installation example of the imaging apparatuses 110. The imaging apparatuses 110 are installed at positions surrounding a specific area in a stadium, and capture images (video images) of objects in the area.

The captured images are transmitted from the imaging apparatuses 110 to the image generation apparatus 120. Alternatively, images corresponding to a partial area (for example, an object area) of the captured images may be transmitted.

The image generation apparatus 120 is a server apparatus, for example, and has a database function and an image processing function. The image generation apparatus 120 stores, as background images, images captured of a scene without an object in advance, such as before the start of imaging of objects in the stadium. The image generation apparatus 120 accumulates images captured by the imaging apparatuses 110. In response to receipt of virtual viewpoint information and playback time information (such as a time code) transmitted by user operations performed on the display control apparatus 130, the image generation apparatus 120 generates a virtual viewpoint image based on the accumulated captured images.

Here, the virtual viewpoint information is information indicating the three-dimensional position and angle of the virtual viewpoint and a point of gaze position in the virtual space. The virtual viewpoint information includes at least position information and direction information. The position information indicates a position relative to a predetermined origin position, such as the center of the image-captured stadium, i.e., front-to-rear, left-to-right, and up-down position information with respect to the origin position. The direction information indicates a direction from the predetermined position, i.e., angles with respect to the front-to-rear, left-to-right, and up-down axes. The virtual viewpoint information also includes point of gaze position information indicating which three-dimensional position is gazed at from the viewpoint position, and distance information about the distance from the point of gaze position to the virtual viewpoint position.

The playback time information is time information about time when the captured images have been captured, and includes time, minute, second, and the number of frames per second. In response to designation of a playback time, the scene recorded at the time is generated as a virtual viewpoint image. The number of frames per second is 60, for example. The plurality of imaging apparatuses 110 performs synchronized imaging based on a not-illustrated time server. The time information about the imaging time indicates the timing of imaging by the plurality of imaging apparatuses 110.

In a scene where there is an object, the image generation apparatus 120 may separate the specific object and other foreground as specific object images by image processing. The specific object is not limited to a person and may be a piece of equipment and other objects with a predetermined image pattern, such as a ball.

The virtual viewpoint image corresponding to the virtual viewpoint information is generated from background images managed by the database and specific object images. An example of the method for generating the virtual viewpoint image is model-based rendering (MBR). MBR refers to a method for generating a virtual viewpoint image using a three-dimensional shape generated based on a plurality of images of an object captured in a plurality of directions. Specifically, MBR is a technique for generating the appearance of a scene from the virtual viewpoint as an image using three-dimensional shapes (models) of the target scene obtained by three-dimensional shape restoration techniques, such as a volumetric intersection method and multi-view-stereo (MVS). The virtual viewpoint image may be generated by using rendering techniques other than MBR. The generated virtual viewpoint image is transmitted to the display 150 via the video signal transmission cable.

Examples of the display control apparatus 130 include a personal computer (PC) and a tablet. A viewpoint controller 131 is a device for setting parameters, such as the position and orientation of the virtual camera. Examples of the viewpoint controller 131 include a mouse, a keyboard, a joystick, a six-axis controller, a touchscreen, and a game controller. A time controller 132 is a device for setting the playback time. The device is an operation device equipped with a turntable, for example. The viewpoint controller 131 and the time controller 132 are operated by the user. The display control apparatus 130 receives information about the user operation from the viewpoint controller 131 and the time controller 132. The display control apparatus 130 then converts the amounts of operation into virtual viewpoint information indicating the position and orientation of the virtual camera and playback time information, and transmits the virtual viewpoint information and the playback time information to the image generation apparatus 120.

Based on the output from the display control apparatus 130 using the operation devices, the virtual viewpoint can be moved not only continuously but to a predetermined virtual viewpoint set in advance, such as a position in front of the object, a position behind the object, and a top-down view position in the virtual space. With a playback time being preset, the virtual viewpoint can be instantaneously moved to the time as well. The display control apparatus 130 also displays objects in the three-dimensional space based on user operations on-screen via an application displayed on a display unit 305 by executing a control program to be described below.

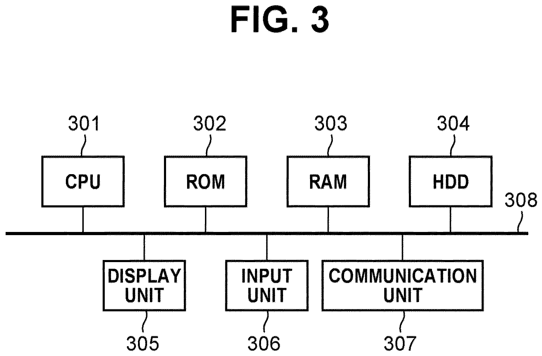

Fig. 3 is a diagram illustrating a hardware configuration of the display control apparatus 130. The display control apparatus 130 includes a central processing unit (CPU) 301, a read-only memory (ROM) 302, a random access memory (RAM) 303, a hard disk drive (HDD) 304, the display unit 305, an input unit 306, and a communication unit 307. The CPU 301 controls entire operation of the display control apparatus 130 using control programs and data stored in the ROM 302 and the RAM 303. The display control apparatus 130 may include one or more pieces of dedicated hardware different from the CPU 301, and the dedicated hardware may execute at least part of the processing of the CPU 301. Examples of such dedicated hardware include an application-specific integrated circuit (ASIC), a field-programmable gate array (FPGA), and a digital signal processor (DSP).

The ROM 302 stores programs that do not need to be changed. The RAM 303 temporarily stores programs and data supplied from the HDD 304 and data supplied from outside via the communication unit 307. The RAM 303 is used as a temporary storage area such as a main memory and a work area of the CPU 301. The HDD 304 stores various types of data and various programs.

The display unit 305 includes a liquid crystal display and a light-emitting diode (LED), for example, and displays various types of information. The input unit 306 can be connected with a keyboard, a mouse, and a six-axis controller, and accepts various operations made by the user. The communication unit 307 performs communication processing with external devices via a network. Examples of the network include the Ethernet (registered trademark).

As another example, the communication unit 307 may communicate wirelessly with external devices.

A system bus 308 connects the components of the display control apparatus 130 and transmits information.

The functions and processing of the display control apparatus 130 to be described below are implemented by the CPU 301 reading a program stored in the ROM 302 or the HDD 304 and executing the program. The image generation apparatus 120 has a hardware configuration similar to that of the display control apparatus 130.

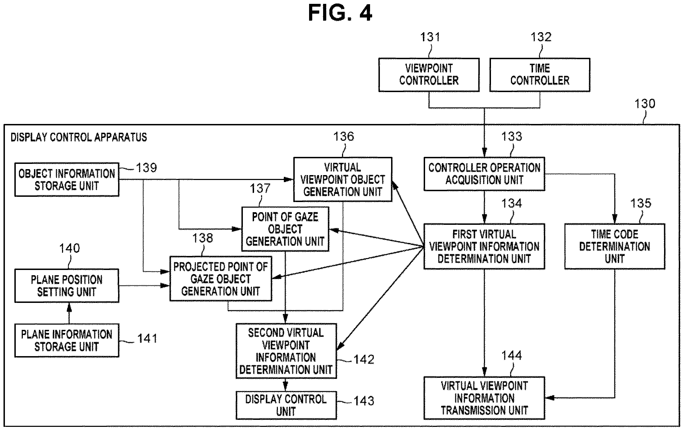

Fig. 4 is a diagram illustrating a functional configuration of the display control apparatus 130. A controller operation acquisition unit 133 periodically acquires operation information about the virtual viewpoint which has been acquired via the viewpoint controller 131 and the time controller 132.

The controller operation acquisition unit 133 converts the operation information about the virtual viewpoint into virtual viewpoint moving amount information and playback time moving amount information, and outputs the virtual viewpoint moving amount information and the playback time moving amount information to a first virtual viewpoint information determination unit 134 (acquisition means) and a time code determination unit 135, respectively. A virtual viewpoint moving amount refers to the amount of movement with respect to the current position of the virtual viewpoint and the current line of sight direction from the virtual viewpoint. A playback time moving amount is the amount of movement with respect to the current playback time. Such pieces of information are determined by applying conversion coefficients set to the amounts of user operation input to the viewpoint controller 131 and the time controller 132.

The first virtual viewpoint information determination unit 134 determines virtual viewpoint information corresponding to the position of the virtual viewpoint and the line of sight direction from the virtual viewpoint designated by the user operation based on the input virtual viewpoint moving amount information. The first virtual viewpoint information determination unit 134 outputs the virtual viewpoint information to a virtual viewpoint object generation unit 136 as first virtual viewpoint information. The first virtual viewpoint information determination unit 134 also outputs the first virtual viewpoint information to a point of gaze object generation unit 137, a projected point of gaze object generation unit 138, a second virtual viewpoint information determination unit 142, and a virtual viewpoint information transmission unit 144. A virtual viewpoint coordinate system is the same as the coordinate system of the imaging apparatuses 110. For example, the center of the stadium may be set to the center of the coordinate system. The center of the coordinate system may be set by the user as appropriate. The virtual viewpoint information is expressed using a three-dimensional position in the coordinate system.

The time code determination unit 135 determines playback time information designated by the user operation based on the input playback time moving amount, and outputs the playback time information to the virtual viewpoint information transmission unit 144. The date and time when the imaging apparatuses 110 start imaging is used as a reference for the playback time. The playback time may be the imaging time itself, or expressed by a time elapsed from the imaging start time with the imaging start time as 0.

The virtual viewpoint object generation unit 136 acquires the first virtual viewpoint information from the first virtual viewpoint information determination unit 134. The virtual viewpoint object generation unit 136 acquires virtual viewpoint object information from an object information storage unit 139 to be described below. The virtual viewpoint object generation unit 136 generates a virtual viewpoint object based on the first virtual viewpoint information and the virtual viewpoint object information. The virtual viewpoint object is intended to enable the user to recognize, in the virtual space, the position of the virtual viewpoint and the line of sight direction from the virtual viewpoint designated by the user operation. The virtual viewpoint object contains data on a shape for expressing the virtual viewpoint object and information about its position in the space. The virtual viewpoint object generation unit 136 outputs the virtual viewpoint object to the second virtual viewpoint information determination unit 142.

The point of gaze object generation unit 137 acquires the first virtual viewpoint information from the first virtual viewpoint information determination unit 134. The point of gaze object generation unit 137 acquires point of gaze object information from the object information storage unit 139. The point of gaze object generation unit 137 generates a point of gaze object based on the point of gaze position information included in the first virtual viewpoint information and the point of gaze object information. The point of gaze object is intended to enable the user to recognize, in the virtual space, the position of the point of gaze from the virtual viewpoint designated by the user operation. The point of gaze object contains data on a shape for expressing the point of gaze object and information about its position in the space. The point of gaze object generation unit 137 outputs the point of gaze object to the second virtual viewpoint information determination unit 142.

The projected point of gaze object generation unit 138 acquires the first virtual viewpoint information from the first virtual viewpoint information determination unit 134. The projected point of gaze object generation unit 138 acquires projected point of gaze object information from the object information storage unit 139. The projected point of gaze object generation unit 138 also acquires projection plane position information from a plane position setting unit 140 to be described below. The projected point of gaze object generation unit 138 generates a projected point of gaze object based on the acquired information. The projected point of gaze object is intended to enable the user to recognize the projected point of gaze object at the position of a projected point of gaze where the position of the point of gaze in the virtual space is projected on a projection plane. The projected point of gaze object contains data on a shape for expressing the projected point of gaze object and information about its position in the space. The projected point of gaze object generation unit 138 outputs the projected point of gaze object to the second virtual viewpoint information determination unit 142.

The object information storage unit 139 stores object information such as the virtual viewpoint object information, the point of gaze object information, and the projected point of gaze object information in advance, and outputs corresponding object information. Specifically, the object information storage unit 139 outputs the virtual viewpoint object information to the virtual viewpoint object generation unit 136. The object information storage unit 139 outputs the point of gaze object information to the point of gaze object generation unit 137. The object information storage unit 139 also outputs the projected point of gaze object information to the projected point of gaze object generation unit 138. As employed herein, object information refers to a three-dimensional model or data having three-dimensional coordinates, which has generated by dedicated software. The data expresses a three-dimensional shape by connecting a plurality of three-dimensional coordinates (vertices). Color information or texture images are stored in association with the planes formed by connecting the plurality of vertices, whereby the user can recognize the object. For example, object information may be meshed data on a plurality of polygons.

The plane position setting unit 140 determines the plane for projection based on plane information set by a plane information storage unit 141 to be described below. For a specific example, the position of a level floor (0 in height) of the stadium is set to the projection plane position. The plane position setting unit 140 outputs the set projection plane position (projection plane position information) to the projected point of gaze object generation unit 138. The projection plane position is not limited thereto and may be designated by the user as appropriate. For example, the projection plane may be a wall or a ceiling of a structure.

The plane information storage unit 141 stores plane information about planes in the three-dimensional space in advance, and outputs relevant plane information. Specifically, the plane information storage unit 141 outputs the plane information to the plane position setting unit 140. As employed herein, the plane information is, like the object information, a three-dimensional model or data that has been generated by dedicated software and has three-dimensional coordinates. The data expresses a plane by connecting a plurality of three-dimensional coordinates (vertices). For example, the plane information may be meshed data on a plurality of polygons. In the present embodiment, the plane is described to be a level floor (0 in height) of the stadium. Color information or texture images are stored in association with the plane formed by connecting the plurality of vertices, whereby the user can recognize the floor. The plane information is not limited to the flat floor surface, and may be a three-dimensional surface expressed by combining a plurality of vertices.

The second virtual viewpoint information determination unit 142 acquires the virtual viewpoint object from the virtual viewpoint object generation unit 136, acquires the point of gaze object from the point of gaze object generation unit 137, and the projected point of gaze object from the projected point of gaze object generation unit 138. The second virtual viewpoint information determination unit 142 acquires the first virtual viewpoint information from the first virtual viewpoint information determination unit 134. Based on the first virtual viewpoint information, the second virtual viewpoint information determination unit 142 determines the second virtual viewpoint information that enables display of the virtual viewpoint object, the point of gaze object, and the projected point of gaze object. The second virtual viewpoint information determination unit 142 outputs the second virtual viewpoint information to a display control unit 143 (display control means). Specifically, the second virtual viewpoint information is information indicating a virtual viewpoint position different from the one operable by the user and a line of sight direction from the virtual viewpoint. For example, the position of the virtual viewpoint indicated by the second virtual viewpoint information may be located behind a first virtual viewpoint (user-operable virtual viewpoint) indicated by the first virtual viewpoint information, and the position is such that the projected point of gaze object can be displayed. The line of sight direction from the second virtual viewpoint indicated by the second virtual viewpoint information may be such that the projected point of gaze object can be displayed. The position of the second virtual viewpoint and the line of sight direction from the second virtual viewpoint may be such that the virtual viewpoint object can be displayed. Being located behind does not indicate a situation where the second virtual viewpoint, the first virtual viewpoint, and the point of gaze are connected by a straight line, but a situation where the second virtual viewpoint is at a position on the opposite side of the first virtual viewpoint with respect to the point of gaze. The position of the second virtual viewpoint is not included in the field of view from the first virtual viewpoint identified by the first virtual viewpoint information. By contrast, the field of view from the second virtual viewpoint covers the position of the first virtual viewpoint, the position of the point of gaze, and the position of the projected point of gaze.

Enabling the display indicates a situation that a display device can display such objects in a virtual viewpoint image generated based on the second virtual viewpoint information. This virtual viewpoint image does not need to simultaneously display the virtual viewpoint, the point of gaze object, and the projected point of gaze object. For example, the point of gaze object and the projected point of gaze object may be displayed while the virtual viewpoint object is not. Any of the objects may be hidden based on display instructions from the user, for example. Alternatively, such objects may be displayed semi-transparent. This prevents the objects from occluding each other, and the user can easily recognize the objects. In a case where the virtual viewpoint image includes an intended object, this object is prevented from being occluded and the user can easily recognize the object.

The display control unit 143 acquires the second virtual viewpoint information from the second virtual viewpoint information determination unit 142. The display control unit 143 displays the virtual viewpoint object, the point of gaze object, and the projected point of gaze object seen from the second virtual viewpoint on a two-dimensional image. In other words, the display control unit 143 displays the objects on the display unit 305 of the display control apparatus 130 to display the position of the virtual camera (first virtual viewpoint) based on the user's virtual viewpoint operation, the point of gaze of the virtual camera, and the shadow of the point of gaze projected on the floor. Such display is implemented using a virtual viewpoint image generated based on the second virtual viewpoint information. This virtual viewpoint image may be generated based on the imaging apparatuses 110 or based on a background model of the stadium stored in the image generation apparatus 120 in advance. The virtual viewpoint image may be generated by the display control unit 143.

The virtual viewpoint information transmission unit 144 transmits the first virtual viewpoint information input from the first virtual viewpoint information determination unit 134 and the playback time information input from the time code determination unit 135 to the image generation apparatus 120. A virtual viewpoint image generated by the image generation apparatus 120 based on the virtual viewpoint information and the playback time information is output to and displayed on the display 150. The virtual viewpoint image generated by the image generation apparatus 120 is an image seen from the first virtual viewpoint and different from the virtual viewpoint image seen from the second virtual viewpoint.

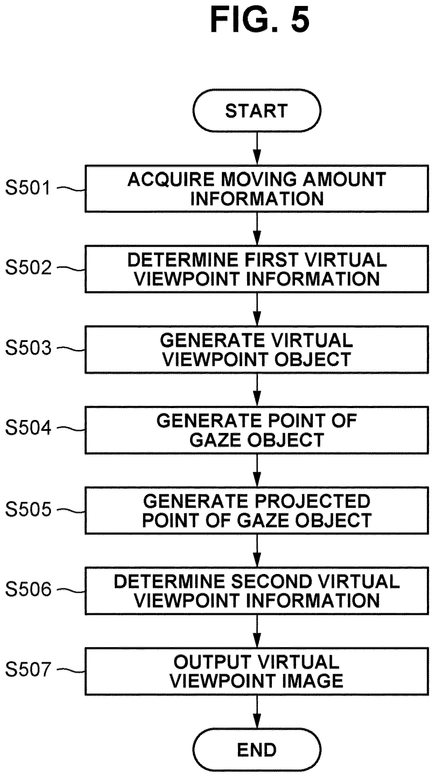

Next, an operation of the display control apparatus 130 will be described. Fig. 5 is a flowchart illustrating the operation of the display control apparatus 130 according to the present embodiment. The following processing is performed by the CPU 301 reading and executing a program stored in the ROM 302 or the HDD 304.

In step S501, the controller operation acquisition unit 133 initially acquires moving amount information about the levers of a six-axis controller, such as a joystick, from the viewpoint controller 131. The controller operation acquisition unit 133 also acquires moving amount information about the turntable rotated by the user, for example, from the time controller 132. Next, the controller operation acquisition unit 133 converts the moving amount information acquired from the viewpoint controller 131 and the time controller 132 into virtual viewpoint moving amount information and playback time moving amount information, respectively, and outputs the virtual viewpoint moving amount information and the playback time moving amount information to the first virtual viewpoint information determination unit 134 and the time code determination unit 135, respectively.

In step S502, the first virtual viewpoint information determination unit 134 determines first virtual viewpoint information based on the input virtual viewpoint moving amount information. The first virtual viewpoint information determination unit 134 outputs the first virtual viewpoint information to the virtual viewpoint object generation unit 136, the point of gaze object generation unit 137, and the projected point of gaze object generation unit 138. The first virtual viewpoint is the virtual viewpoint operable by the user and corresponds to the virtual viewpoint image that is displayed on the display 150.

In step S503, the virtual viewpoint object generation unit 136 generates a virtual viewpoint object. Specifically, the virtual viewpoint object generation unit 136 acquires the first virtual viewpoint information from the first virtual viewpoint information determination unit 134. The virtual viewpoint object generation unit 136 also acquires the virtual viewpoint object information from the object information storage unit 139. Based on the first virtual viewpoint information and the virtual viewpoint object information, the virtual viewpoint object generation unit 136 generates a virtual viewpoint object that enables the user to recognize the position of the first virtual viewpoint and the line of sight direction from the first virtual viewpoint in the virtual space. For example, the virtual viewpoint object may have the shape of a camera or other shapes.

In step S504, the point of gaze object generation unit 137 generates a point of gaze object. Specifically, the point of gaze object generation unit 137 acquires the first virtual viewpoint information from the first virtual viewpoint information determination unit 134. The point of gaze object generation unit 137 also acquires the point of gaze object information from the object information storage unit 139. Based on the point of gaze information contained in the first virtual viewpoint information and the point of gaze object information, the point of gaze object generation unit 137 generates a point of gaze object that enables the user to recognize the position of the point of gaze from the first virtual viewpoint in the virtual space. For example, the point of gaze object may have a spherical shape or a rectangular prism shape.

In step S505, the projected point of gaze object generation unit 138 generates a projected point of gaze object. Specifically, the projected point of gaze object generation unit 138 acquires the first virtual viewpoint information from the first virtual viewpoint information determination unit 134. The projected point of gaze object generation unit 138 also acquires the projected point of gaze object information from the object information storage unit 139. The projected point of gaze object generation unit 138 further acquires the projection plane position information from the plane position setting unit 140. Based on the acquired information, the projected point of gaze object generation unit 138 generates a projected point of gaze object that enables the user to recognize the object at the position where the position of the point of gaze from the first virtual viewpoint in the virtual space is projected on the plane position. For example, the projected point of gaze object may have a circular shape or a rectangular shape. The projected point of gaze object indicates the position of the point of gaze on the projection plane. The projected point of gaze object may be generated by projecting the point of gaze object on the projection plane. In such a case, the projected point of gaze object generation unit 138 may acquire the point of gaze object from the point of gaze object generation unit 137.

In step S506, the second virtual viewpoint information determination unit 142 determines second virtual viewpoint information. Specifically, the second virtual viewpoint information determination unit 142 acquires the first virtual viewpoint information from the first virtual viewpoint information determination unit 134. The second virtual viewpoint information determination unit 142 also acquires the virtual viewpoint object, the point of gaze object, and the projected point of gaze object. Based on the acquired information, the second virtual viewpoint information determination unit 142 determines the second virtual viewpoint information. The second virtual viewpoint information indicates information about a second virtual viewpoint from which the virtual viewpoint object, the point of gaze object, and the projected point of gaze object can be virtually captured. More specifically, the second virtual viewpoint information is determined so that the position of the second virtual viewpoint is located behind the first virtual viewpoint and the line of sight direction from the second virtual viewpoint is such that the projected point of gaze object can be virtually captured. The second virtual viewpoint information determination unit 142 outputs the second virtual viewpoint information to the display control unit 143.

In step S507, the display control unit 143 acquires the second virtual viewpoint information from the second virtual viewpoint information determination unit 142. The display control unit 143 generates a two-dimensional image (virtual viewpoint image) including the virtual viewpoint object, the point of gaze object, and the projected point of gaze object seen from the second virtual viewpoint, and outputs the virtual viewpoint image. In other words, the display control unit 143 displays the two-dimensional image including the virtual viewpoint object, the point of gaze object, and the projected point of gaze object on the display unit 305 of the display control apparatus 130. This results in displaying of the position of the first virtual viewpoint based on the user's virtual viewpoint operation, the position of the point of gaze of the first virtual viewpoint, and the position of the projected point of gaze in the virtual space. The user can thus easily find out the position of the point of gaze in the virtual space.

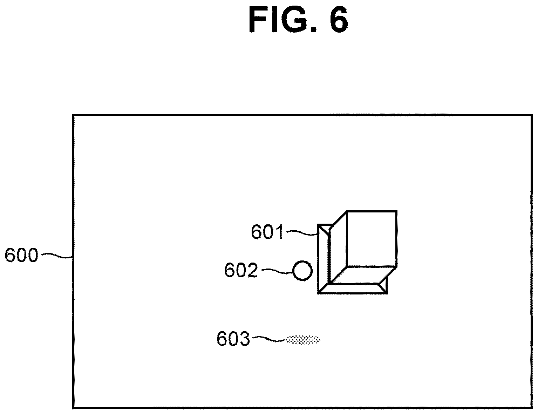

Fig. 6 illustrates an example of a screen displayed on the display unit 305 of the display control apparatus 130. A screen 600 displays a virtual viewpoint object 601, a point of gaze object 602, and a projected point of gaze object 603.

The virtual viewpoint object 601 has the shape of a camera. The position of the camera indicates the position of the first virtual viewpoint. The direction of the camera indicates the line of sight direction from the first virtual viewpoint. The point of gaze object 602 has a spherical shape. The position of the point of gaze object 602 indicates the three-dimensional position of the point of gaze from the first virtual viewpoint in the virtual space. With this point of gaze object 602 alone, it is difficult for the user to intuitively comprehend what height the point of gaze object 602 is located at in the virtual space. For such a reason, the projected point of gaze object 603 is displayed. The projected point of gaze object 603 is a projection of the point of gaze object 602 on the projection plane (for example, the floor) and has an elliptical shape.

For example, the projected point of gaze object 603 corresponds to the shadow of the point of gaze object 602 in a case where a point source of light is virtually installed on a line connecting the projection plane and the point of gaze object 602 in a direction orthogonal to the projection plane. The shape of the projected point of gaze object 603 may be adjusted to the projection plane. For example, in a case where the projection plane is uneven, the projected point of gaze object 603 may be displayed in a shape adjusted to the unevenness. This helps the user to find out the position of the point of gaze.

The projected point of gaze object 603 does not need to faithfully reproduce the projected shape of the point of gaze object 602 on the projection plane. For example, the shape of the projected point of gaze object 603 may be emphasized so that the projected point of gaze object 603 has a diameter greater than that of the point of gaze object 602. This helps the user to find out the position of the point of gaze. Other emphasizing techniques such as blinking the projected point of gaze object 603 may be used. Alternatively, the point of gaze object 602 may be blinked.

As described above, according to the present embodiment, a projected point of gaze object based on a position of a point of gaze is displayed to enable a user to recognize the shadow on the floor, and the user can easily and intuitively find out the position of the point of gaze.

In the present embodiment, the projected point of gaze object 603 is described to be displayed as a shadow on the projection plane. However, this is not restrictive. A projected point of gaze object having an arrow shape or bar shape connecting a position of a point of gaze and a point of the projected point of gaze may be generated and displayed. This helps the user to easily recognize the positional relationship between a point of gaze and a projected point of gaze even in a case where the point of gaze and the projected point of gaze are far apart from each other.

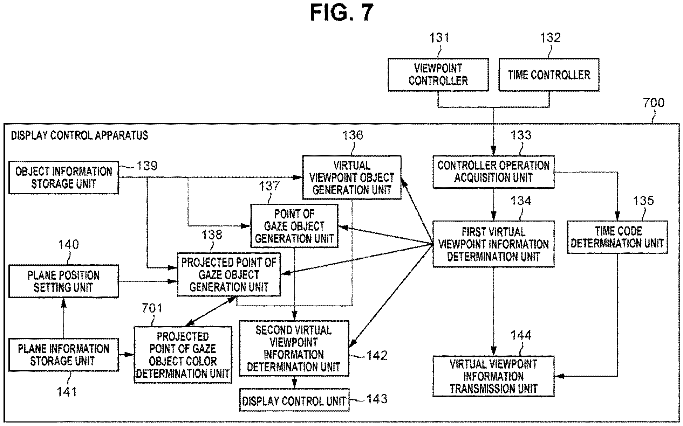

Fig. 7 is a diagram illustrating a functional configuration of a display control apparatus 700 according to a second embodiment. The display control apparatus 700 includes a functional unit to be described below in addition to the configuration of the display control apparatus 130 according to the first embodiment described with reference to Fig. 4. Specifically, the display control apparatus 700 includes a projected point of gaze object color determination unit 701 in addition to the configuration of the display control apparatus 130. The functional units other than the projected point of gaze object color determination unit 701 are similar to those of the display control apparatus 130, and the redundant description will thus be omitted.

The projected point of gaze object color determination unit 701 acquires the plane information from the plane information storage unit 141. The projected point of gaze object color determination unit 701 also acquires the position information about the projected point of gaze and the projected point of gaze object information from the projected point of gaze object generation unit 138. Based on the position information about the projected point of gaze and the plane information, the projected point of gaze object color determination unit 701 identifies projection plane color information that is color information at a plane position corresponding to the position of the projected point of gaze. The projected point of gaze object color determination unit 701 compares color information contained in the projected point of gaze object with the identified projection plane color information. In a case where the compared color information about the projected point of gaze object falls within a predetermined range, the projected point of gaze object color determination unit 701 changes the color information about the projected point of gaze object and outputs the changed color information to the projected point of gaze object generation unit 138.

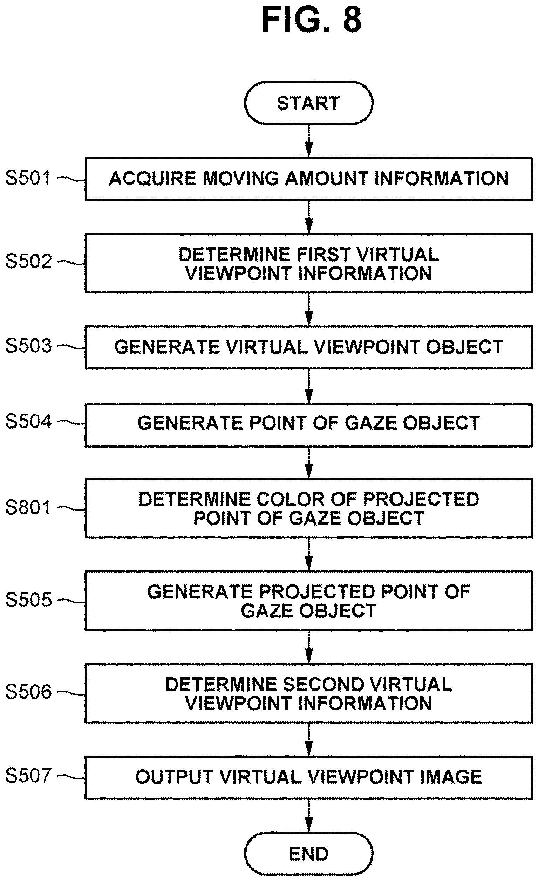

Fig. 8 is a flowchart illustrating an operation of the display control apparatus 700 according to the present embodiment. Steps S501 to S504 and steps S505 to S507 are similar to those described with reference to Fig. 5, and the redundant description will thus be omitted.

In step S801, the projected point of gaze object color determination unit 701 determines the color of the projected point of gaze object. Specifically, based on the position information about the projected point of gaze and the plane information, the projected point of gaze object color determination unit 701 identifies projection plane color information that is the color information on the plane position corresponding to the position of the projected point of gaze. The projected point of gaze object color determination unit 701 compares the color information contained in the projected point of gaze object with the identified projection plane color information. In a case where the color information about the projected point of gaze object falls within the predetermined range with respect to the projection plane color information, the projected point of gaze object color determination unit 701 changes the color information about the projected point of gaze object and outputs the changed color information to the projected point of gaze object generation unit 138. On the other hand, in a case where the color information about the projected point of gaze object exceeds the predetermined range with respect to the projection plane color information, the projected point of gaze object color determination unit 701 does not change the color information about the projected point of gaze object. In such a case, the projected point of gaze object color determination unit 701 notifies the projected point of gaze object generation unit 138 that the color information is not changed. Alternatively, the projected point of gaze object generation unit 138 may output, even in a case where the color information is not changed, the determined color information to the projected point of gaze object generation unit 138.

A description will be given using an example case in which that the color information about the floor at the position of the projected point of gaze indicates a brightness of 1 on a scale of 1 to 10, and brightness based on the color information about the projected point of gaze object is also 1.

In such a case, the brightness of the floor at the position of the projected point of gaze and that of the projected point of gaze object are the same, and the user has difficulty in recognizing the position of the projected point of gaze. The projected point of gaze object color determination unit 701 thus increases the brightness of the projected point of gaze object. Specifically, the projected point of gaze object color determination unit 701 changes the color information to a brightness of 5 on the scale of 1 to 10, and outputs the changed color information to the projected point of gaze object generation unit 138. Depending on the brightness of the floor, the projected point of gaze object color determination unit 701 may make the brightness of the projected point of gaze object lower than that of the floor.

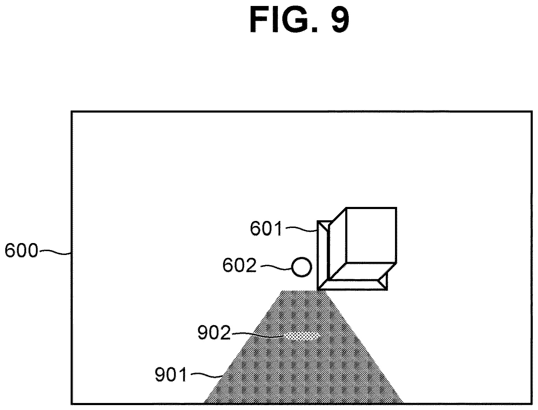

Fig. 9 illustrates an example of a screen displayed on a display unit 305 of the display control apparatus 700 according to the present embodiment. The screen 600 displays the virtual viewpoint object 601, the point of gaze object 602, a low-brightness floor 901 where the floor brightness is as low as 1 on the scale of 1 to 10, and a projected point of gaze object 902. In a case where the projected point of gaze moves to the low-brightness floor 901, the brightness of the projected point of gaze object 902 is increased. For example, in a case where the brightness based on the color information about the projected point of gaze object 902 is 1 on the scale of 1 to 10, the color information is changed to 5 and the projected point of gaze object 902 is displayed based on the changed color information. This enables the user to recognize the position of the projected point of gaze.

The brightness of the projected point of gaze object 902 is described to be changed with position in a case where the brightness of the floor changes with position. However, this is not restrictive. For example, the projected point of gaze object color determination unit 701 may acquire the value of the brightness that varies with the floor position from the entire area, and determine the color information about the projected point of gaze object 902 to a value having brightness different from the brightness values in the entire area. This can reduce the processing load of the display control apparatus 700 since the color information about the projected point of gaze object 902 does not need to be changed in accordance with the position of the point of gaze.

While the brightness is described to be changed with the floor position, the projected point of gaze object color determination unit 701 may change the color information about the projected point of gaze object 902 with time in a case where the brightness at the same position of the floor changes with time.

In the present embodiment, brightness based on color information about a projected point of gaze object is described to be changed as an example. However, this is not restrictive, and saturation and/or hue based on color information may be changed.

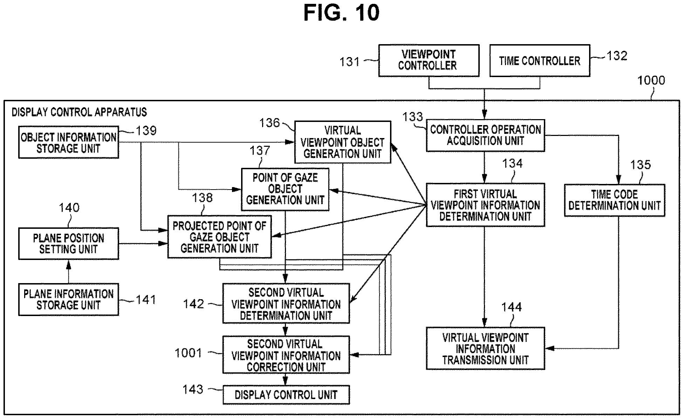

Fig. 10 is a diagram illustrating a functional configuration of a display control apparatus 1000 according to a third embodiment. The display control apparatus 1000 includes a functional unit to be described below in addition to the functional units of the display control apparatus 130 according to the first embodiment described with reference to Fig. 4. Specifically, the display control apparatus 1000 includes a second virtual viewpoint information correction unit 1001.

The second virtual viewpoint information correction unit 1001 acquires the virtual viewpoint object from the virtual viewpoint object generation unit 136, acquires the point of gaze object from the point of gaze object generation unit 137, and the projected point of gaze object from the projected point of gaze object generation unit 138. The second virtual viewpoint information correction unit 1001 also acquires the second virtual viewpoint information from the second virtual viewpoint information determination unit 142. The second virtual viewpoint information correction unit 1001 corrects the second virtual viewpoint information based on the virtual viewpoint object, the point of gaze object, and the projected point of gaze object.

Specifically, depending on a position of the second virtual viewpoint determined by the second virtual viewpoint information determination unit 142, at least either one of the point of gaze object and the projected point of gaze object can be occluded by the virtual viewpoint object. In such a case, the second virtual viewpoint information correction unit 1001 corrects the position of the second virtual viewpoint to a position where the objects can be simultaneously displayed. The second virtual viewpoint information correction unit 1001 outputs the second virtual viewpoint information about the position-corrected second virtual viewpoint to the display control unit 143. The second virtual viewpoint information correction unit 1001 may correct a line of sight direction from the second virtual viewpoint instead of the position of the second virtual viewpoint, or correct both the position of the second virtual viewpoint and the line of sight direction from the second virtual viewpoint.

In a case where the point of gaze object is occluded by the virtual viewpoint object, the second virtual viewpoint information correction unit 1001 may correct the second virtual viewpoint information so that the point of gaze object is not occluded by the virtual viewpoint object. In a case where the projected point of gaze object is occluded by the virtual viewpoint object, the second virtual viewpoint information correction unit 1001 may correct the second virtual viewpoint information so that the projected point of gaze object is not occluded by the virtual viewpoint object. The second virtual viewpoint information correction unit 1001 may correct the second virtual viewpoint information so that the point of gaze object and the projected point of gaze object are not occluded by the virtual viewpoint object.

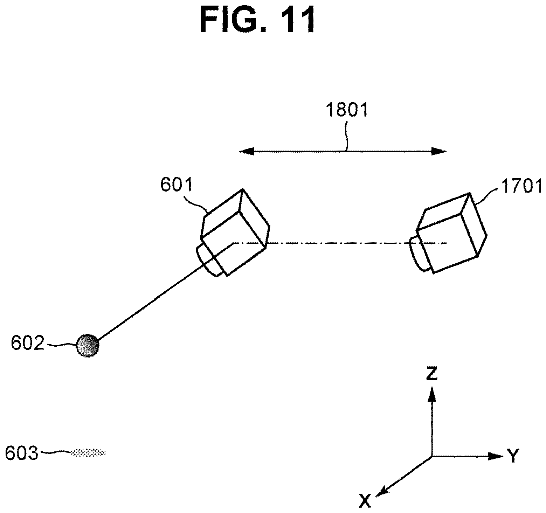

A method for determining the position of the second virtual viewpoint by the second virtual viewpoint information correction unit 1001 will now be described. For example, as illustrated in Fig. 11, the second virtual viewpoint information determination unit 142 determines the position of a second virtual viewpoint 1701 such that the second virtual viewpoint 1701 is located at a position with a predetermined distance 1801 behind the virtual viewpoint object 601 (in a positive Y-axis direction) and at the same height as that of the Z-axis position of the virtual viewpoint object 601.

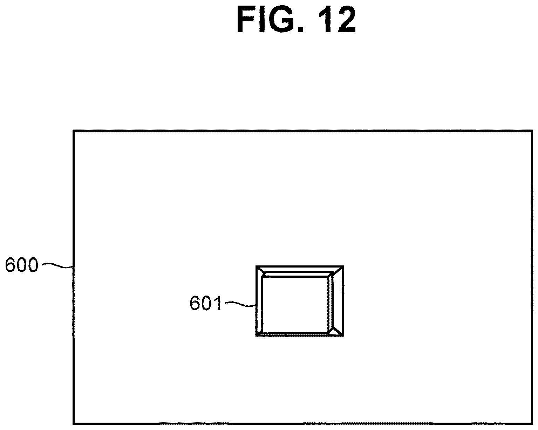

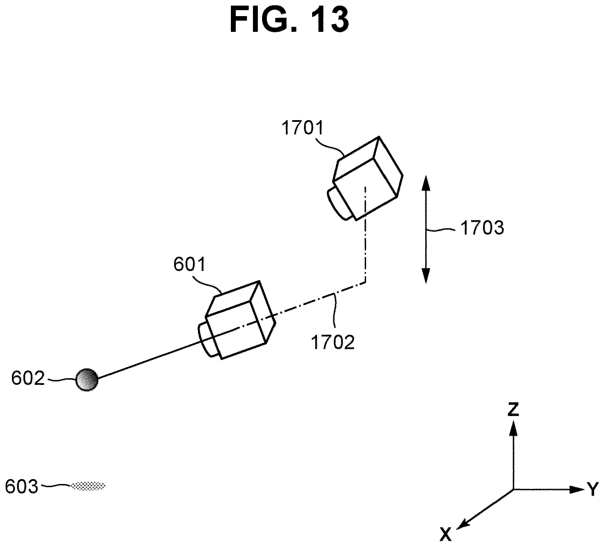

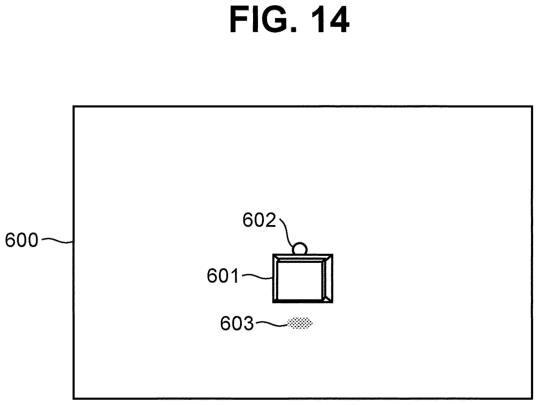

As a result, the virtual viewpoint object 601 and the point of gaze object 602 can be captured from the second virtual viewpoint 1701 in a non-overlapping manner. However, with such a determination method, the point of gaze object 602 is occluded by the virtual viewpoint object 601 when seen from the position of the second virtual viewpoint 1701 in a case where the Z-axis position of the virtual viewpoint object 601 and the Z-axis position of the point of gaze object 602 are at the same height. The second virtual viewpoint information correction unit 1001 therefore corrects the position of the second virtual viewpoint 1701. In other words, with the virtual viewpoint object 601 and the point of gaze object 602 in the virtual space, the position of the second virtual viewpoint 1701 is determined based on the positions of these objects. Specifically, the second virtual viewpoint information correction unit 1001 initially determines whether the second virtual viewpoint 1701 falls on a line 1702 connecting the point of gaze object 602 and the virtual viewpoint object 601. In a case where the second virtual viewpoint 1701 falls on the line 1702, the image captured from the second virtual viewpoint 1701 is displayed with the point of gaze object 602 occluded by the virtual viewpoint object 601 as illustrated in Fig. 12. To avoid this, the second virtual viewpoint information correction unit 1001 elevates the second virtual viewpoint 1701 by a predetermined distance in the Z-axis direction. In the example of Fig. 13, the second virtual viewpoint information correction unit 1001 corrects the position of the second virtual viewpoint 1701 by moving the second virtual viewpoint 1701 by a distance 1703 in the Z-axis axis direction. In the present embodiment, the distance 1703 has a predetermined value. However, this is not restrictive. For example, the distance 1703 may be dynamically determined based on the moving speed and moving direction of the virtual viewpoint object 601. As a result, both the virtual viewpoint object 601 and the point of gaze object 602 can be visually observed from the position of the second virtual viewpoint 1701. Specifically, in a case of an image captured from the second virtual viewpoint 1701, the virtual viewpoint object 601 and the point of gaze object 602 are displayed without occlusion as illustrated in Fig. 14. The position of the second virtual viewpoint 1701 may be moved in the X-axis direction, not necessarily limited to the Z-axis direction. The position of the second virtual viewpoint 1701 may be moved in a positive Z-axis direction or negative Z-axis direction. The position of the second virtual viewpoint 1701 may be moved in a positive X-axis direction or negative X-axis direction.

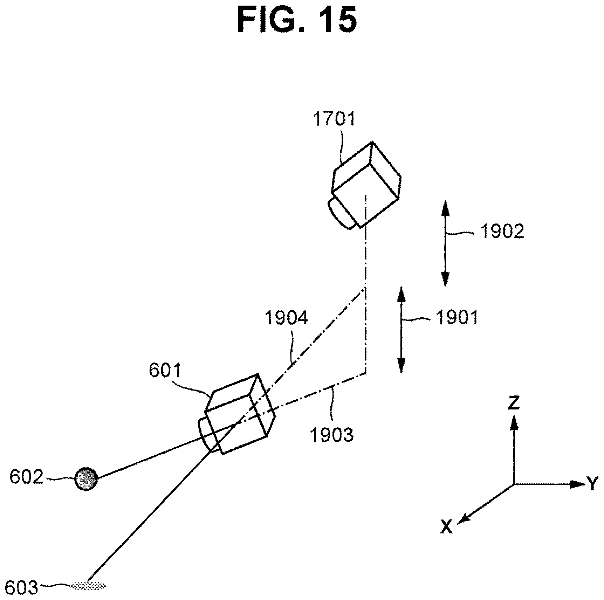

While the second virtual viewpoint 1701 is described to be corrected so that the point of gaze object 602 is not occluded by the virtual viewpoint object 601, the present embodiment is not limited thereto. For example, the second virtual viewpoint information correction unit 1001 may correct the second virtual viewpoint 1701 so that the projected point of gaze object 603 is not occluded by the virtual viewpoint object 601. The present embodiment is also applicable to a case where the point of gaze object 602 and the projected point of gaze object 603 are occluded by the virtual viewpoint object 601. Fig. 15 illustrates a case where the position of the second virtual viewpoint 1701 is corrected so that the point of gaze object 602 and the projected point of gaze object 603 are not occluded by the virtual viewpoint object 601.

The second virtual viewpoint information correction unit 1001 initially determines whether the second virtual viewpoint 1701 falls on a line 1903 connecting the point of gaze object 602 and the virtual viewpoint object 601. In a case where the second virtual viewpoint 1701 falls on the line 1903, the second virtual viewpoint information correction unit 1001 performs a first correction by elevating the second virtual viewpoint 1701 by a predetermined distance 1901 in the Z-axis direction. The second virtual viewpoint information correction unit 1001 then determines whether the corrected second virtual viewpoint 1701 falls on a line 1904 connecting the projected point of gaze object 603 and the virtual viewpoint object 601. In a case where the second virtual viewpoint 1701 falls on the line 1904, the second virtual viewpoint information correction unit 1001 performs a second correction by further elevating the second virtual viewpoint 1701, which has been corrected by the first correction, by a predetermined distance 1902 in the Z-axis direction. This prevents display where the point of gaze object 602 and the projected point of gaze object 603 are occluded by the virtual viewpoint object 601. The first correction and the second correction may be performed at the same time.

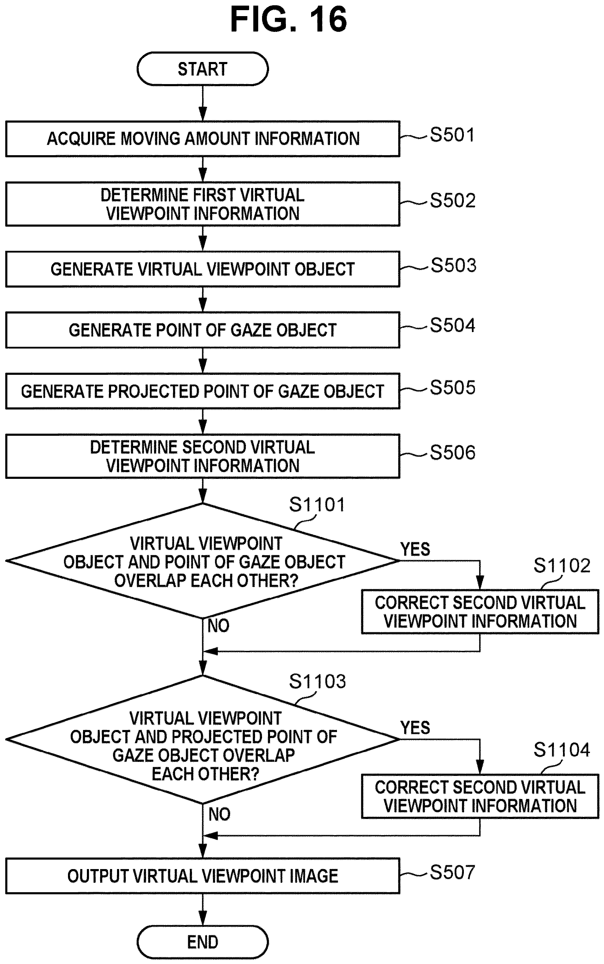

Fig. 16 is a flowchart illustrating an operation of the display control apparatus 1000 according to the present embodiment. Steps S501 to S506 are similar to those described with reference to Fig. 5, and the redundant description will thus be omitted. The following processing is performed by the CPU 301 reading and executing a program stored in the ROM 302 or the HDD 304.

In step S1101, the second virtual viewpoint information correction unit 1001 determines whether the point of gaze object 602 is occluded by (overlaps) the virtual viewpoint object 601 when seen from the position of the second virtual viewpoint 1701 indicated by the input second virtual viewpoint information. In a case where the point of gaze object 602 is occluded by the virtual viewpoint object 601 (YES in step S 1101), the processing proceeds to step S1102. In a case where the point of gaze object 602 is not occluded by the virtual viewpoint object 601 (NO in step S 1101), the processing proceeds to step S1103. This determination is performed as described above, and the redundant description will thus be omitted. In step S1102, the second virtual viewpoint information correction unit 1001 corrects the second virtual viewpoint information so that the second virtual viewpoint moves to a position where the virtual viewpoint object 601 and the point of gaze object 602 are simultaneously displayed. The specific correction technique is as described above.

In step S1103, the second virtual viewpoint information correction unit 1001 determines whether the projected point of gaze object 603 is occluded by (overlaps) the virtual viewpoint object 601 when seen from the position of the second virtual viewpoint 1701 indicated by the corrected second virtual viewpoint information. In a case where the projected point of gaze object 603 is occluded by the virtual viewpoint object 601 (YES in step S 1103), the processing proceeds to step S1104. In a case where the projected point of gaze object 603 is not occluded by the virtual viewpoint object 601 (NO in step S1103), the processing proceeds to step S507. This determination is performed as described above, and the redundant description will thus be omitted. In step S1104, the second virtual viewpoint information correction unit 1001 corrects the second virtual viewpoint information so that the second virtual viewpoint 1701 moves to a position where the virtual viewpoint object 601, the point of gaze object 602, and the projected point of gaze object 603 are simultaneously displayed. The specific technique is as described above. The second virtual viewpoint information correction unit 1001 outputs the second virtual viewpoint information based on the corrected second virtual viewpoint to the display control unit 143.

In step S507, the display control unit 143 displays, on a two-dimensional image, the virtual viewpoint object 601, the point of gaze object 602, and the projected point of gaze object 603 seen from the position of the second virtual viewpoint 1701 indicated by the corrected second virtual viewpoint information. In other words, the display control unit 143 displays the position of the virtual camera based on the user's virtual viewpoint operation by displaying the two-dimensional image on the display unit 305 of the display control apparatus 130.

As described above, according to the present embodiment, the moving operation of the virtual camera results in display intuitively understandable to the user by locating a second virtual viewpoint behind and at the same height as a virtual viewpoint object. Moreover, in a case where the position of a point of gaze overlaps a virtual viewpoint object, a position of a second virtual viewpoint is corrected so that the position of the point of gaze is always easy to be found out.

In the present embodiment, in displaying a virtual viewpoint object, a point of gaze object, and a projected point of gaze object, the object shapes do not necessarily need to be fully displayed. The object shapes may be displayed only in part.

In the present embodiment, in Fig. 15, a second virtual viewpoint is described to be moved in a case where either of a point of gaze object and a projected point of gaze object is occluded by a virtual viewpoint object. However, this is not restrictive. For example, the present embodiment is also applicable in a case where only one of a point of gaze object and a projected point of gaze object is occluded by a virtual viewpoint object. For example, in the procedure of Fig. 16, a second virtual viewpoint is described to be corrected (second correction in step S1104) in a case where a projected point of gaze object overlaps a virtual viewpoint object. However, steps S1103 and S1104 may be omitted. Similarly, steps S1101 and S1102 (first correction) may be omitted. In such a manner, either the first correction or the second correction may be omitted.

The movement of the second virtual viewpoint 1701 is not limited to the foregoing. For example, in Fig. 15, in a case where the overlap with a projected point of gaze object is detected after a second virtual viewpoint is elevated as much as the predetermined distance 1901, the second virtual viewpoint 1701 may be lowered as much as the predetermined distance 1901 from the position prior to the elevation by the second correction.

A second virtual viewpoint may be moved onto a curve or spherical surface with a point of gaze object at the center and the distance between a point of gaze object and a virtual viewpoint object plus the length of the line 1903 as the radius. Similarly, the second virtual viewpoint 1701 may be horizontally moved in consideration of the size of the virtual viewpoint object 601.

While the display control apparatus 1000 according to the present embodiment is described to include the second virtual viewpoint information correction unit 1001, this is not restrictive. For example, the second virtual viewpoint information determination unit 142 may determine the position of a second virtual viewpoint so that a virtual viewpoint object does not overlap at least either one of a point of gaze object and a projected point of gaze object. In such a case, the second virtual viewpoint information correction unit 1001 does not need to be included as a functional unit of the display control apparatus 1000 according to the present embodiment.

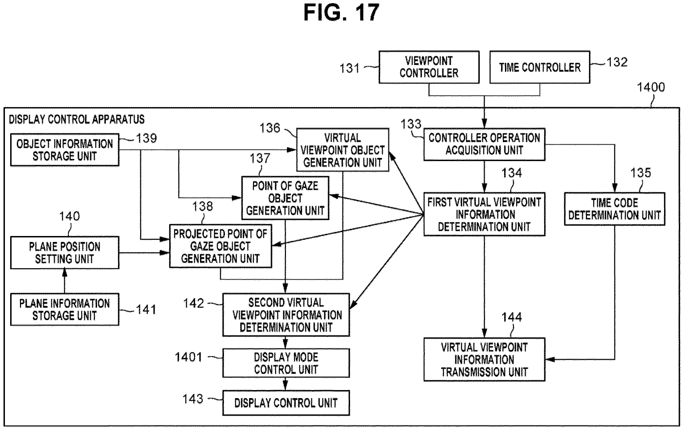

A fourth embodiment deals with a case where the display mode of a first virtual viewpoint object is changed. Fig. 17 is a diagram illustrating a functional configuration of a display control apparatus 1400 according to the present embodiment. The display control apparatus 1400 includes a functional unit to be described below in addition to the configuration of the display control apparatus 130 according to the first embodiment described with reference to Fig. 4.

A display mode control unit 1401 acquires the second virtual viewpoint information from the second virtual viewpoint information determination unit 142. The display mode control unit 1401 also acquires the virtual viewpoint object, the point of gaze object, and the projected point of gaze object via the second virtual viewpoint information determination unit 142. The display mode control unit 1401 determines whether the virtual viewpoint object occludes either of the point of gaze object and the projected point of gaze object when seen from the virtual viewpoint position based on the second virtual viewpoint information. In a case where at least either one of the objects is occluded by the virtual viewpoint object, the display mode control unit 1401 determines to change the display mode so that the virtual viewpoint object becomes semi-transparent. The display mode control unit 1401 then outputs, to the display control unit 143, an image tentatively captured from the position of the second virtual viewpoint with the virtual viewpoint object semi-transparent. With the virtual viewpoint object semi-transparent, the user can recognize the point of gaze object and the projected point of gaze object.

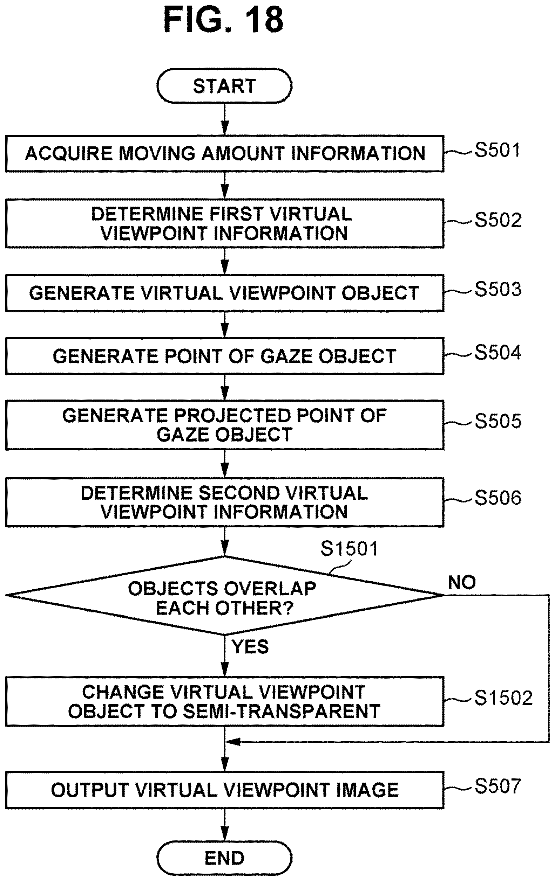

Fig. 18 is a flowchart illustrating an operation of the display control apparatus 1400 according to the fourth embodiment. Steps S501 to S506 are similar to those described with reference to Fig. 5, and the redundant description will thus be omitted. The following processing is performed by the CPU 301 reading and executing a program stored in the ROM 302 or the HDD 304.

In step S1501, the display mode control unit 1401 determines whether the point of gaze object and/or the projected point of gaze object is occluded by the virtual viewpoint object when seen from the position of the second virtual viewpoint indicated by the input second virtual viewpoint information. In a case where the point of gaze object and/or the projected point of gaze object is occluded by the virtual viewpoint object (YES in step S1501), the processing proceeds to step S1502. In a case where neither of the point of gaze object and the projected point of gaze object is occluded by the virtual viewpoint object (NO in step S1501), the processing proceeds to step S507.

In step S1502, the display mode control unit 1401 changes the display mode to set the virtual viewpoint object to be semi-transparent. The display mode control unit 1401 outputs the second virtual viewpoint information based on the second virtual viewpoint to the display control unit 143.

In step S507, the display control unit 143 displays an image including the semi-transparent virtual viewpoint object, the point of gaze object, the projected point of gaze object seen from the input second virtual viewpoint position. With the virtual viewpoint object displayed semi-transparent in the image displayed on the display unit of the display control apparatus 1400, the user can recognize the virtual viewpoint object, the point of gaze object, and the projected point of gaze object.

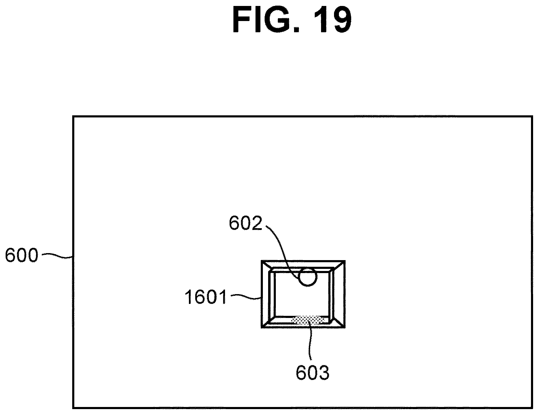

Fig. 19 illustrates a screen display example of the display control apparatus 1400. An image seen from the position based on the second virtual viewpoint information is displayed on the screen 600 of the display control apparatus 1400. A semi-transparent virtual viewpoint object 1601 enables the user to observe the point of gaze object 602 and the projected point of gaze object 603.

As described above, according to the fourth embodiment, the virtual viewpoint object is set to be semi-transparent to help the user to find out the position of a point of gaze in a case where a virtual viewpoint object overlaps the position of the point of gaze. In the present embodiment, the point of gaze object and the projected point of gaze object are described to be occluded by the virtual viewpoint object. However, this is not restrictive, and an occluding object may be set to be semi-transparent in a case where any of the object shapes is occluded. In the present embodiment, the display mode is described to be a semi-transparent mode. However, the size of the virtual viewpoint object may be reduced so that the point of gaze object and the projected point of gaze object can be visually observed.

### <Other Embodiments>

The present disclosure can also be realized by processing in which a program for realizing one or more functions of the above-described embodiments is supplied to a system or an apparatus via a network or a storage media, and one or more processors in a computer of the system or the apparatus read and execute the program. The present invention can also be realized by a circuit (for example, ASIC) that realizes one or more functions.

### < Others >

The disclosure of the above-described embodiments includes the following configurations, method, and program.

### (Configuration 1)

A display control apparatus comprising:
an acquisition unit configured to acquire information indicating a position of a point of gaze from a virtual viewpoint corresponding to a virtual viewpoint image that is generated based on a plurality of images captured by a plurality of imaging apparatuses; and
a display control unit configured to display an image including a point of gaze object representing the point of gaze and a projected point of gaze object indicating a position of the point of gaze on a projection plane.

### (Configuration 2)

The display control apparatus according to configuration 1, wherein the projected point of gaze object is generated based on a projection of the point of gaze on the projection plane.

### (Configuration 3)

The display control apparatus according to configuration 1 or 2, wherein the image is a virtual viewpoint image corresponding to another virtual viewpoint different from the virtual viewpoint.

### (Configuration 4)

The display control apparatus according to any one of configurations 1 to 3, wherein the image includes a virtual viewpoint object representing the virtual viewpoint.

### (Configuration 5)

The display control apparatus according to configuration 4, further comprising a determination unit configured to determine another virtual viewpoint corresponding to an image including the point of gaze object, the projected point of gaze object, and the virtual viewpoint object, the another virtual viewpoint being different from the virtual viewpoint.

### (Configuration 6)

The display control apparatus according to configuration 4 or 5, wherein the virtual viewpoint object is at a position not overlapping the point of gaze object in the image.

### (Configuration 7)

The display control apparatus according to any one of configurations 4 to 6, wherein the virtual viewpoint object is at a position not overlapping the projected point of gaze object in the image.

### (Configuration 8)

The display control apparatus according to any one of configurations 4 to 7, wherein the virtual viewpoint object is at a position not overlapping the point of gaze object and/or the projected point of gaze object.

### (Configuration 9)

The display control apparatus according to any one of configurations 4 to 8, wherein the virtual viewpoint object is displayed semi-transparent.

### (Configuration 10)

The display control apparatus according to any one of configurations 1 to 9, wherein the projected point of gaze object is separated from the point of gaze object.

### (Method)

A display control method comprising:
acquiring information indicating a position of a point of gaze from a virtual viewpoint corresponding to a virtual viewpoint image that is generated based on a plurality of images captured by a plurality of imaging apparatuses; and
displaying an image including a point of gaze object representing the point of gaze and a projected point of gaze object indicating a position of the point of gaze on a projection plane.

### (Program)

A program that causes a computer to perform the above-described display control method.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present invention has been described with reference to embodiments, it is to be understood that the invention is not limited to the disclosed embodiments but is defined by the scope of the following claims.

## Claims

1. A display control apparatus (130) comprising:
acquisition means (134) configured to acquire virtual viewpoint information including a position of a point of gaze which is a position gazed at from a virtual viewpoint, wherein the virtual viewpoint corresponds to a virtual viewpoint image that is generated based on a plurality of images captured by a plurality of imaging apparatuses (110); and
display control means (143) configured to display an image (600) including a point of gaze object (602) indicating the position of the point of gaze and a projected point of gaze object (603) indicating a position of the point of gaze on a projection plane.

2. The display control apparatus (130) according to claim 1, wherein the virtual viewpoint information includes a position of the virtual viewpoint and a line of sight direction from the virtual viewpoint.

3. The display control apparatus (130) according to claim 1 or 2, wherein the projected point of gaze object (603) is generated based on a projection of the point of gaze on the projection plane.

4. The display control apparatus (130) according to claim 1, 2 or 3, wherein the image is a virtual viewpoint image corresponding to another virtual viewpoint different from the virtual viewpoint.

5. The display control apparatus (130) according to any one of claims 1 to 4, wherein the image includes a virtual viewpoint object (601) representing the virtual viewpoint.

6. The display control apparatus (130) according to claim 5, further comprising determination means (142) configured to determine another virtual viewpoint corresponding to a second image including the point of gaze object (602), the projected point of gaze object (603), and the virtual viewpoint object (601), the another virtual viewpoint being different from the virtual viewpoint.

7. The display control apparatus (130) according to claim 5 or 6, wherein the virtual viewpoint object (601) is at a position not overlapping the point of gaze object in the second image.

8. The display control apparatus (130) according to any one of claims 4 to 7, wherein the virtual viewpoint object (601) is at a position not overlapping the projected point of gaze object (603) in the second image.

9. The display control apparatus (130) according to any one of claims 4 to 7, wherein the virtual viewpoint object (601) is at a position not overlapping the point of gaze object (602) and/or the projected point of gaze object (603) in the second image.

10. The display control apparatus (130) according to any one of claims 4 to 8, wherein the virtual viewpoint object (601) is displayed semi-transparent.

11. The display control apparatus (130) according to any one of the preceding claims, wherein the projected point of gaze object (603) is separated from the point of gaze object (602).

12. A display control method comprising:
acquiring virtual viewpoint information including a position of a point of gaze which is a position gazed at from a virtual viewpoint, wherein the virtual viewpoint corresponds to a virtual viewpoint image that is generated based on a plurality of images captured by a plurality of imaging apparatuses (110); and
displaying an image including a point of gaze object (602) indicating the position of the point of gaze and a projected point of gaze object (603) indicating a position of the point of gaze on a projection plane.

13. A program that causes a computer to perform the display control method according to claim 12.
